# EUROPEAN PATENT APPLICATION

(11) **EP 4 819 422 A1**
(43) Date of publication of application: **07.10.2026**
(21) Application number: 26167937.7
(22) Date of filing: 26.03.2026
(51) Int. Cl.: H02G 9/06

(54) **PROTECTION SLEEVE WITH INTEGRATED MOLDED LATCH**

(30) Priority: 02.04.2025 US 202563782346 P; 11.03.2026 US 202619563410
(71) Applicant: Panduit Corp., Tinley Park, Illinois 60487 (US)
(72) Inventor: Seils, Philip W., Tinley Park, 60487 (US); Sylvester, David J., Tinley Park, 60487 (US)
(74) Representative: Sona, Alessandro

(57) **Abstract**

A protection sleeve assembly including at least two half sleeves are provided for protecting elongated objects, such as cables, from abrasion and environmental conditions. The protection sleeves are molded from a pliable material to include integrated latches and latch openings for mating two half sleeves together around the elongated object.

## Description

### CROSS-REFERENCE TO RELATED APPLICATION(S)

This application claims benefit to U.S. Provisional Patent Application No. 63/782,346, filed April 2, 2025.

### TECHNICAL FIELD

The application relates to a protection sleeve for covering elongated objects, such as cables, from abrasion and environmental conditions. The protection sleeve is molded from a pliable material to include two half sleeves that include integrated latches and latch openings for mating the two half sleeves together around the elongated object.

### BACKGROUND

Cables are utilized for a connected world to transmit and receive electrical transmissions and implement data infrastructure applications. Some of these cables may be submerged in harsh ocean environments where extra protection is needed to protect the cable from being damaged within these environments.

### SUMMARY

According to an embodiment, disclosed is a protection sleeve comprising a gear receptacle including a latch molded to the gear receptacle; a gear protrusion including a latch opening molded into the gear protrusion; a first end including male attachment members; and a second end including female attachment members.

According to an embodiment, disclosed is a protection half sleeve comprising: a substantially half cylinder shaped housing body, the housing body comprising a first side and an opposite second side, and a first end and an opposite second end, the first side comprising: a gear receptacle including a latch molded to the gear receptacle, and a gear protrusion including a latch opening leading to a latch receptacle molded into the gear protrusion, the first end comprising a male attachment member, and the second end comprising a female attachment member

A detailed description of these and other non-limiting exemplary embodiments of the protective sleeve is set forth below together with accompanying drawings.

### BRIEF DESCRIPTION OF THE DRAWINGS

FIG. 1 is a perspective view of a first half sleeve included in a protection sleeve assembly, according to an embodiment of this disclosure.
FIG. 2 is side view of the first half sleeve shown in FIG. 1 and a second half sleeve, where the second half sleeve mirrors the first half sleeve and is configured to mate with the first half sleeve around an elongated object, according to an embodiment of this disclosure.
FIG. 3 is a bottom-side view of the first half sleeve shown in FIG. 1, according to an embodiment of this disclosure.
FIG. 4 is a cross-sectional view of the first half sleeve taken along the line 4-4 shown in FIG. 3, according to an embodiment of this disclosure.
FIG. 5 is a cross-sectional view of the first half sleeve taken along the line 5-5 shown in FIG. 3, according to an embodiment of this disclosure.
FIG. 6 is a side view of the first half sleeve and the second half sleeve mated together in an offset pattern, according to an embodiment of this disclosure.
FIG. 7 is a cross-sectional view of the first half sleeve and the second half sleeve mated together at a portion taken along the line 7-7 shown in FIG. 6, according to an embodiment of this disclosure.
FIG. 8 is a cross-sectional view of the first half sleeve and the second half sleeve mated together at a portion taken along the line 7-7 shown in FIG. 7, where a tool is also shown for disassembling the latching feature that mates the first half sleeve and the second half sleeve together, according to an embodiment of this disclosure.

### DETAILED DESCRIPTION

Detailed and non-limiting embodiments of the protective sleeve including a molded latch are disclosed herein. However, it is to be understood that the disclosed embodiments are merely exemplary and may take various and alternative forms. The figures may not be necessarily to scale, and features may be exaggerated or minimized to show details of particular components. Therefore, specific structural and functional details disclosed herein are not to be interpreted as limiting, but merely as a representative basis for teaching one skilled in the art.

This disclosure describes a protection sleeve that is molded in polyurethane, where the protection sleeve is comprised of two interlocking half sleeves configured to mate to each other to surround a cable for protecting the cable from external elements.

Typically, such protection sleeves would use additional fasteners to ensure the half sleeves stay mated to each other to protect the cable under high load forces due to the bending of the cable when, for example, being offloaded from a ship to rest on the sea floor, or when suspended between pylons. These additional fasteners may include cable ties or latches made, for example, from titanium or stainless steel, which are expensive metals due to the manufacturing requirements for the raw material, for strength and corrosion resistance. So, relying on these additional fasteners adds to increased costs due to not only the metals but also the labor and tooling required to properly install them on the sleeves.

According to the design of the protection sleeves disclosed herein, each of the half sleeves that comprise the protection sleeve will include integral latches and corresponding openings for mating the two opposing half sleeves together. By making the mating latches and holes integral to the mold of the half sleeves, additional fasteners and/or banding cable ties may not be further needed to keep the two half sleeves mated. This design provides benefits in the form of lower costs to make and use the protection sleeves and may further reduce installation time as extra time is not needed for an installer to manually install a cable tie around the protection sleeves to keep them surrounding the cables for protection.

So, the self-latching design disclosed herein may be completely molded in a straight pull style tool, thus eliminating the need for any additional fastening hardware. This results in reducing both the cost and assembly time for installing the protective sleeves around elongated objects that need protecting, such as underwater cables.

Disclosed herein is a protection sleeve assembly comprised of at least two opposing half sleeves for mating together around an elongated object (e.g., cable) to protect the elongated object from external elements and conditions. The half sleeves include integrated latches that are molded together with the main body of the half sleeves, as well as opposing latch openings for holding the latches in a mated condition. The integrated latches enable two half protection sleeves to mate together efficiently and effectively, without the need for additional external fasteners such as metal ties. The integrated latches provide a strong enough mating force to keep the two opposing half protection sleeves mated together while being utilized to protect the elongated object, while also enabling the disassembly of the half sleeves when desired. Therefore, the half sleeves comprising the protection sleeve assembly may be releasable mated using the integrated latches described herein. The disassembly of the half sleeves may require, for example, a disassembly tool for releasing the latch mating feature.

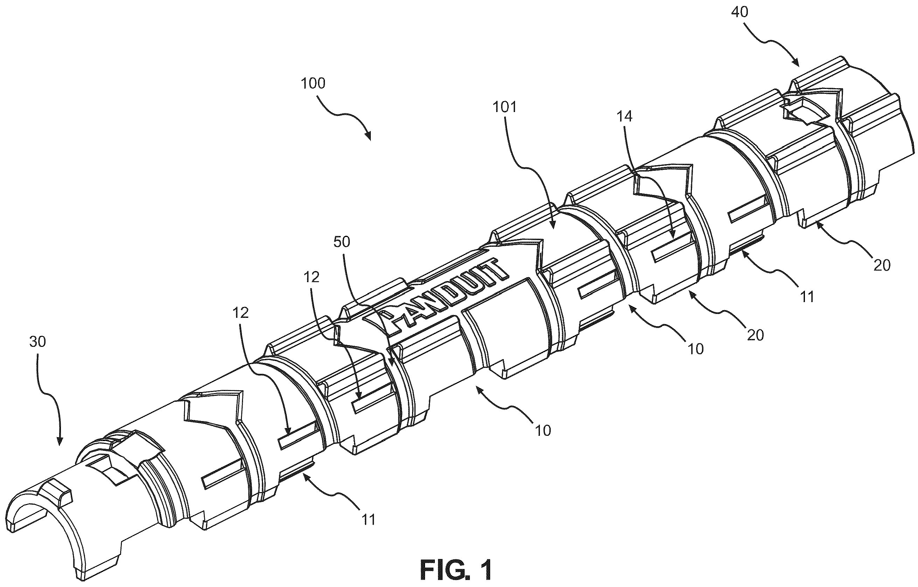

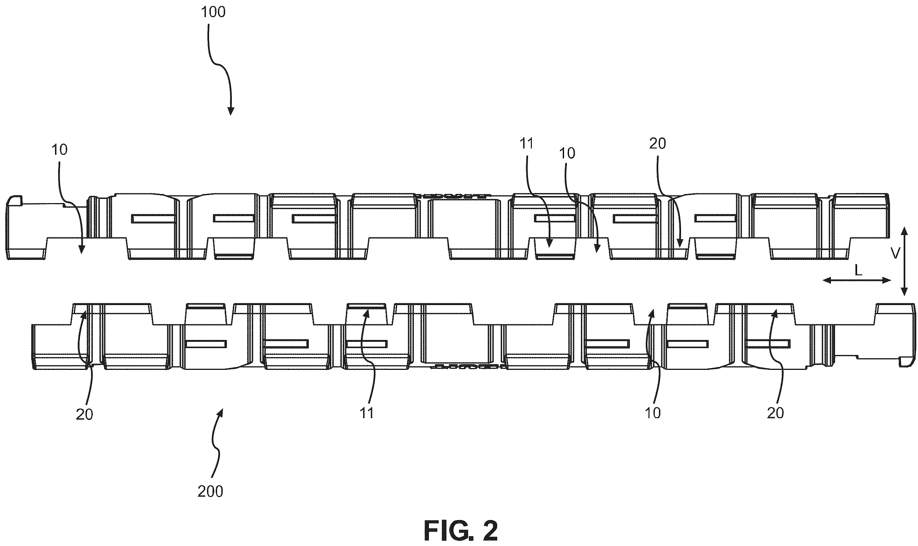

FIG. 1 shows a perspective view of a first half sleeve 100 that may comprise the protection sleeve assembly described herein. The first half sleeve 100 includes a gear-type design that includes protruding bosses 20, and gear openings 10. As shown in FIG. 2, a protection sleeve assembly includes the first half sleeve 100 mated to a second half sleeve 200. As the first half sleeve 100 and the second half sleeve 200 are structurally the same, they may be referred to as the half sleeve 100, 200 when describing features that are commonly included in both the first half sleeve 100 and the second half sleeve 200.

According to the protection sleeve assembly shown in FIG. 2, when a first half sleeve 100 is brought into position to mate with an opposing second half sleeve 200, the protruding bosses 20 from the first half sleeve 100 are configured to mate into the gear openings 10 of the opposing second half sleeve 200, and reciprocally, the protruding bosses 20 from the second half sleeve 200 are configured to mate into the gear openings 10 of the first half sleeve 100. The first half sleeve 100 also includes a male end 30 including mating features, and a female end 40 including mating features. This gear-type design and mating features provided by the male end 30 and the female end 40 are described in more detail from U.S. Provisional Patent Application No. 63/685,313, filed August 21, 2024, and later filed U.S. Non-Provisional Patent Application No. 19/257,759, filed July 2, 2025.

While the gear-type design and mating features provided by the male end 30 and the female end 40 may assist in keeping opposing half sleeves and adjacent half sleeves mated together and resist pulling forces in the lateral direction L, they do not necessarily assist in keeping the mated half sleeves 100, 200 from pulling apart from each other in the vertical direction V, as represented in FIG. 2.

To provide the mating strength to keep the first half sleeve 100 mated with the opposing second half sleeve 200, each of the first half sleeve 100 and the second half sleeve includes one or more latches 11. As shown in FIG. 1, each latch 11 included in the first half sleeve 100 is positioned within a corresponding gear opening 10. A latch 11 may be left out from the gear opening 10 on the male end 30, as shown in FIG. 2.

An undercut passthrough 12 is located on a body 101 of the half sleeve 100, 200 at a location that is above the latch 11. The undercut passthrough 12 is a feature that enables the latch 11 to be formed integral to the body 101 during the molding process of the half sleeve 100, 200. The body 101 also includes one or more channels 50 for receiving ties, such as metal locking ties, to further hold the first half sleeve 100 and the second half sleeve 200 mated together under certain circumstances such as repair situations.

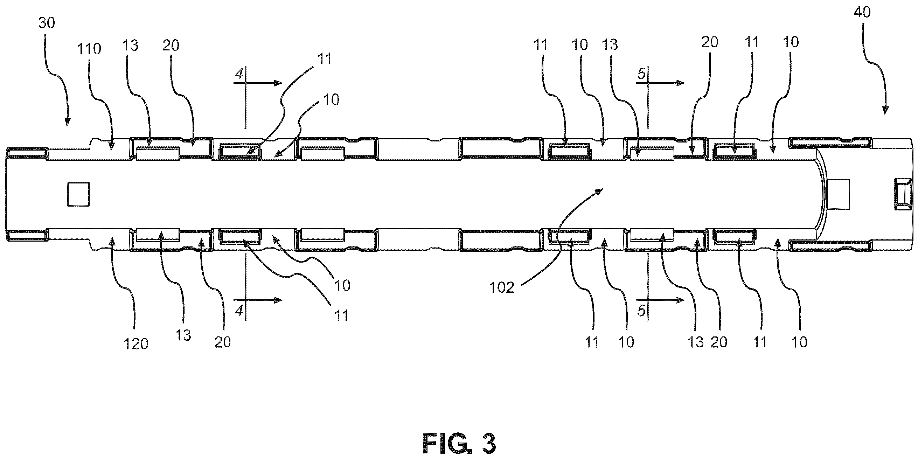

FIG. 3 shows a bottom-side view looking up into an inner cavity 102 of the first half sleeve 100. This view provides a better illustration of how the latches 11 are included on both a first side wall 110 and a second side wall 120, where the first side wall 110 and the second side wall 120 are on opposite sides of the inner cavity 102. The latches 11 are included within a space of the corresponding gear opening 10. A width of the latch 11 may be less than a width of the gear opening 10. According to some embodiments, the width of the latch 11 may be more than half the width of the gear opening 10. According to some embodiments, the width of the latch 11 may be less than half the width of the gear opening 10. According to some embodiments, the width of the latch 11 may be approximately half the width of the gear opening 10. According to some embodiments, the width of the latch 11 may take up the entire width of the gear opening 10.

Also shown in FIG. 3 are latch receptacles 13 being located inside a corresponding protruding boss 20. Each latch receptacle 13 also includes a corresponding undercut passthrough 14, where the undercut passthrough 14 is used during the molding process so that the latch receptacles 13 may be formed as an integral part of the overall body 101 of the half sleeves 100, 200. The latch receptacles 13 are positioned within their corresponding protruding boss 20 on the first side wall 110 and the second side wall 120 to flank the inner cavity 102. The latch receptacles 13 are formed so that a corresponding latch 11 may be securely fit into the latch receptacle 13 to provide sufficient holding force to keep the first half sleeve 100 and second half sleeve 200 mated together. The latches 11 and the latch receptacles 13 are positioned in an alternating pattern, following the alternating pattern of the gear openings 10 and the protruding boss 20 in the gear-type design.

This design for the integrated latch 11 and the latch receptacle 13 may eliminate the need for any supplementary fastening devices since all the needed features to lock the half sleeves 100, 200 together are incorporated into the body of the half sleeves 100, 200. Thus, the integrated latch 11 and the latch receptacle 13 are molded in the same material as the body 101 of the half sleeves 100, 200, thus reducing not only the number of unique parts in the overall protection sleeve assembly but also the number of unique materials, the cost, the required labor during assembly, and the assembly time.

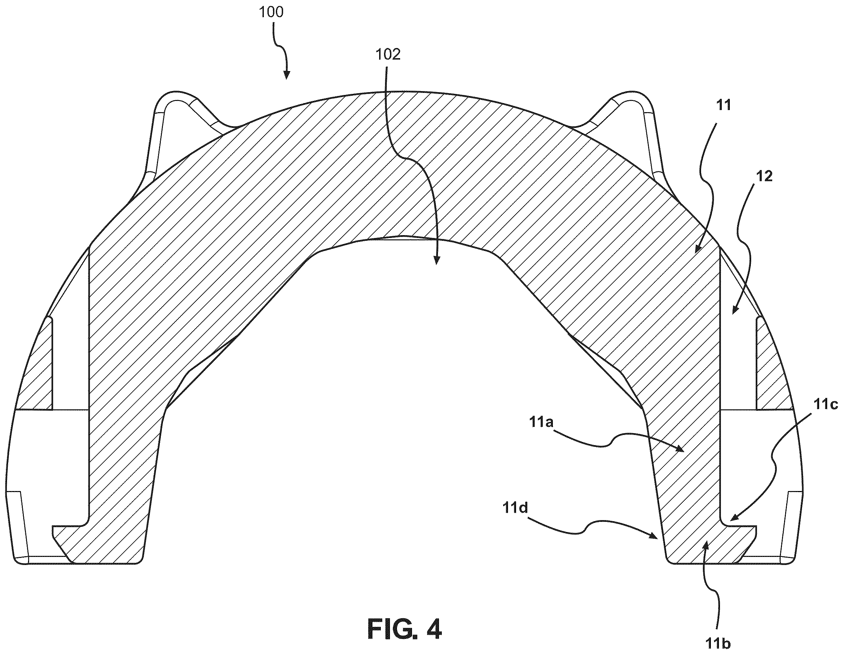

FIG. 4 shows a cross-sectional view of a portion of the first half sleeve 100 taken along the line 4-4 that cuts through the latch 11. FIG. 4 also shows the corresponding undercut passthrough 12 used for molding the latch 11. Each latch 11 includes a latch neck 11a and a latch head 11b. The latch neck 11a is the portion of the latch 11 that connects the gear opening 10 to the latch head 11b. The latch head 11b includes an undercut 11c that is configured to mate with the corresponding latch receptacle 13 on the opposite second half sleeve 200.

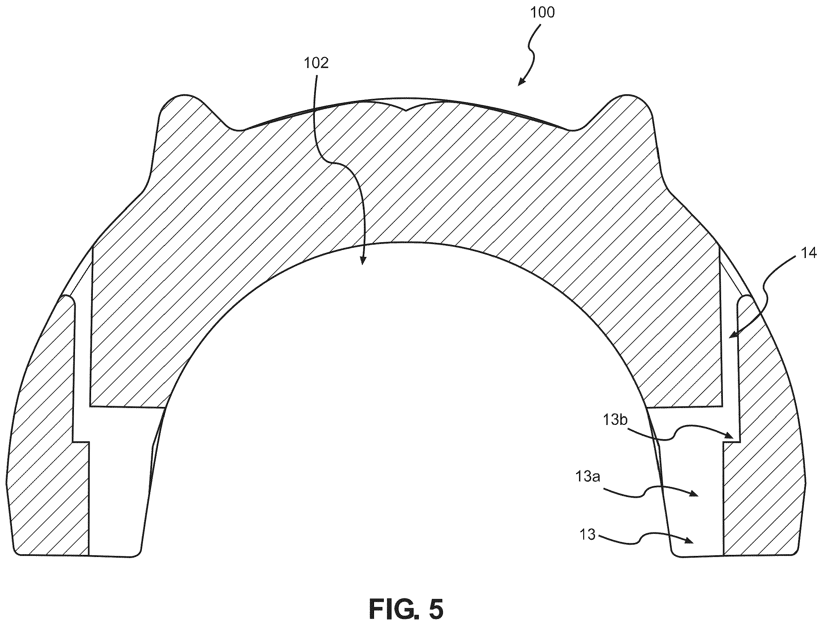

For example, FIG. 5 shows a cross-sectional view of a portion of the first half sleeve 100 taken along the line 5-5 that cuts through the latch receptacle 13. Also shown is the undercut passthrough 12 used for molding the latch receptacle 13. The latch receptacle 13 is shown to include an inner cavity 13a and an undercut 13b. So, when the latch 11 is pushed into the inner cavity 13a of the latch receptacle 13, the latch head 11b will move up into the inner cavity 13a until the undercut 11c from the latch head 11b pushes past the undercut 13b from the latch receptacle 13. When the undercut 11c from the latch head 11b pushes past the undercut 13b from the latch receptacle 13 and rests against each other, this is the mated position that provides the holding force for preventing the latch 11 from being pulled out of the latch receptacle 13.

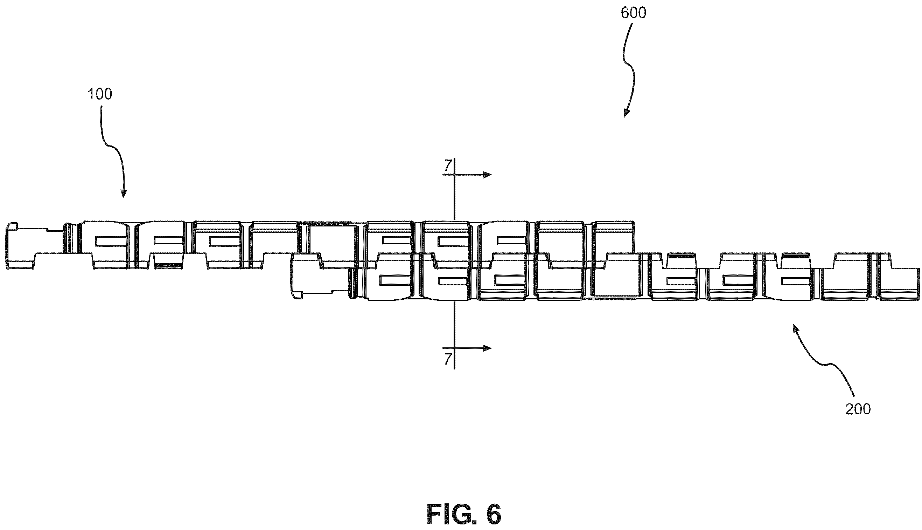

FIG. 6 shows an exemplary protection sleeve assembly 600 including the first half sleeve 100 mated to the second half sleeve 200, according to an exemplary embodiment. The first half sleeve 100 is mated to the second half sleeve 200 in an offset manner which, when installed with additional half sleeves 100, 200, may provide greater mating connections in the L and/or V directions when compared to mating the first half sleeve 100 and the second half sleeve 200 to be directly mirror each other. According to other embodiments, the first half sleeve 100 and the second half sleeve 200 may be mated to directly mirror each other.

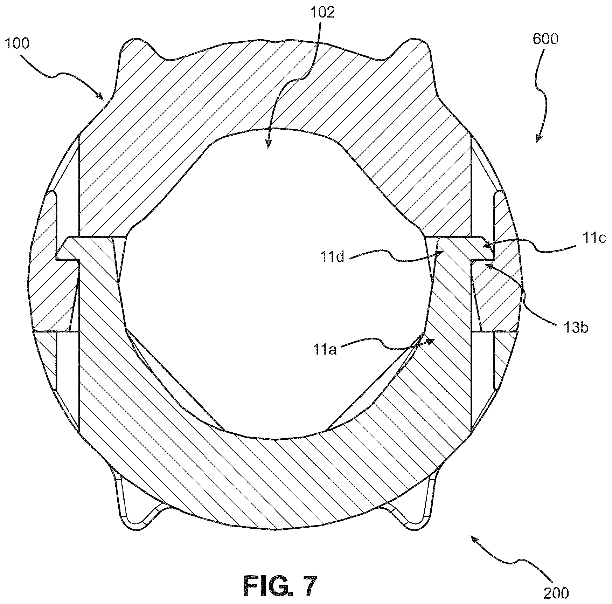

FIG. 7 shows a cross-sectional view of the protection sleeve assembly 600 taken along a line 7-7 where a latch 11 from the first half sleeve 100 is mated into a latch receptacle 13 of the second half sleeve 200. During the mating of the first half sleeve 100 and the second half sleeve 200, the latch neck 11a from the latch 11 in the first half sleeve 100 may flex slightly out of the way of the walls in the inner cavity 13a of the latch receptacle 13 in the second half sleeve 200 until the latch neck 11a aligns with the opening to the undercut 13b in the latch receptacle 13. Then the latch head 11b may slide into place via the latch neck 11a such that the undercut 11c from the latch head 11b rests against the undercut 13b from the latch receptacle 13. With the latch 11 and latch receptacle 13 mated as shown in FIG. 7, the first half sleeve 100 and the second half sleeve 200 are now secured together around the elongated object (e.g., cable) housed within the inner cavity 102, which is concentric with the half sleeves 100, 200 that are mated together in the protection sleeve assembly 600.

With the elongated object inside and concentric, having the latches 11 and latch receptacles 13 also on the inside of the sleeve body 101 offers the benefit of using the elongated object as a latch "lock" since the elongated object will prevent the latches 11 from being able to advance inward due to the physical presence of the elongated object pushing back from the inward pressure forces.

According to some embodiments, a rib or another spring like feature may be added on the inner side 11d of the latch head 11b that may further restrict the ability for the latch 11 to move when assembled by pushing against the cable.

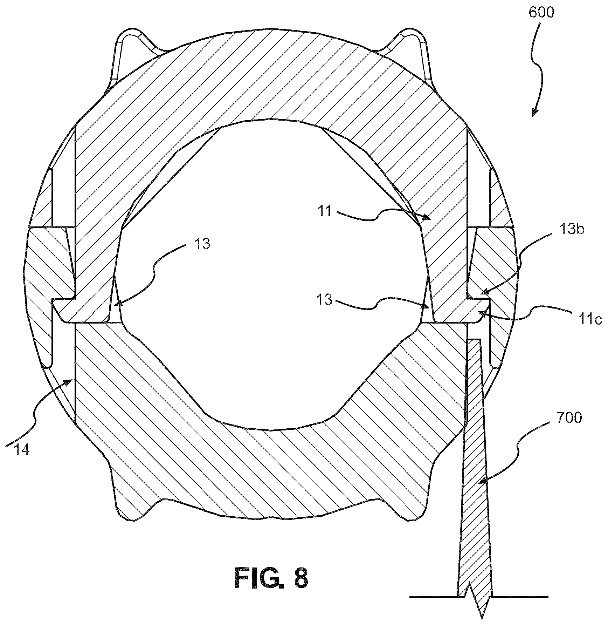

To release the mated first half sleeve 100 from the second half sleeve 200, a blade like tool 700 (e.g., a slotted blade screwdriver) may be pushed into the appropriate undercut passthrough 14 of the corresponding latch receptacle 13 holding the latch 11, and push down towards the mated half to disengage the undercut 11c of the latch head 11b from the undercut 13b from the latch receptacle 13, as shown in FIG. 8. This force will push the latch head 11b inward towards the elongated object (e.g., cable) housed within the inner cavity 102.

The present disclosure thus describes a protection sleeve including integrated molded latches, and methods for mating such protection sleeves together. As is readily apparent from the foregoing, various non-limiting embodiments of the protective sleeve and methods for mating such protection sleeves together have been described. While various embodiments have been illustrated and described herein, they are exemplary only and it is not intended that these embodiments illustrate and describe all those possible. Instead, the words used herein are words of description rather than limitation, and it is understood that various changes may be made to these embodiments without departing from the scope of the following claims.

## Claims

1. A protection half sleeve comprising:
a substantially half cylinder shaped housing body, the housing body comprising a first side and an opposite second side, and a first end and an opposite second end, the first side comprising:
a gear receptacle including a latch molded to the gear receptacle; and
a gear protrusion including a latch opening leading to a latch receptacle molded into the gear protrusion;
the first end comprising a male attachment member; and
the second end comprising a female attachment member.

2. The protection half sleeve of claim 1, wherein the protection half sleeve comprises a channel formed to span from the first side to the second side on an outer surface of the protection half sleeve.

3. The protection half sleeve of claim 1 or claim 2, wherein the latch comprises a latch neck and a latch head, wherein the latch head is wider than the latch neck.

4. The protection half sleeve of claim 3, wherein the latch receptacle includes an undercut configured to engage with the latch head.

5. The protection half sleeve of any one of the preceding claims, wherein the latch receptacle includes an undercut passthrough configured to enable the latch receptacle to be molded into the housing body, the undercut passthrough spanning from the latch receptacle to an opening on an outer surface of the housing body.

6. The protection half sleeve of any one of the preceding claims, wherein the latch comprises a latch neck including a first thickness that is less than a second thickness for a top portion of the housing positioned between the first side and the second side.

7. The protection half sleeve of any one of the preceding claims, wherein the latch includes a first width and the gear receptacle includes a second width, wherein the first width is greater than the second width.

8. The protection half sleeve of any one of the preceding claims, wherein the latch opening includes a third width and the gear protrusion includes a fourth width, wherein the third width is greater than the fourth width.

9. The protection half sleeve of any one of the preceding claims, wherein the latch includes a first width and the gear receptacle includes a second width, wherein the first width is less than the second width.

10. The protection half sleeve of any one of the preceding claims, wherein the latch opening includes a third width and the gear protrusion includes a fourth width, wherein the third width is less than the fourth width.

11. A method of assembling a protection sleeve assembly around an elongated object, the protection sleeve assembly comprising a first protection half sleeve and a second protection half sleeve, wherein each of the first protection half sleeve and the second protection half sleeve is the protection half sleeve of any of claims 1 to 10, the method comprising:
positioning the latch of the first protection half sleeve within the corresponding latch receptacle of the second protection half sleeve such that the first protection half sleeve and the second protection half sleeve are mated together and such that at least a portion of the elongated object is housed between the housing body of the first protection half sleeve and the housing body of the second protection half sleeve.

12. A method of attaching a first protection half sleeve and a second protection half sleeve, wherein each of the first protection half sleeve and the second protection half sleeve is the protection half sleeve of any of claims 1 to 10, the method comprising:
attaching the first end comprising the male attachment member of the first protection half sleeve to the second end comprising the female attachment member of the second protection half sleeve.

13. A protection sleeve assembly for protecting an elongated object, the protection sleeve assembly comprising a first protection half sleeve according to any of claims 1 to 10 and a second protection half sleeve according to any of claims 1 to 10,
wherein the latch of the first protection half sleeve is positioned within a corresponding latch receptacle of the second protection half sleeve such that the first protection half sleeve and the second protection half sleeve are mated together in a manner suitable for housing an elongated object between the housing body of the first protection half sleeve and the housing body of the second protection half sleeve.

14. An assembly comprising a first protection half sleeve according to any of claims 1 to 10 and a second protection half sleeve according to any of claims 1 to 10, wherein the first end comprising the male attachment member of the first protection half sleeve is attached to the second end comprising the female attachment member of the second protection half sleeve.

15. Use of the protection half sleeve of any of claims 1 to 10 as subsea cable protection equipment.
